# FASCICULE DE BREVET EUROPEEN

(11) **EP 1 661 742 B1**
(45) Date de publication et mention de la délivrance du brevet: **19.08.2009**
(21) Numéro de dépôt: 05300963.5
(22) Date de dépôt: 24.11.2005
(51) Int. Cl.: B60J 1/18, B60J 5/10

(54) **Dispositif de montage d'une lunette arrière ouvrante pour un véhicule automobile et lunette arrière équipée d'un tel dispositif de montage**
Montagevorrichtung für eine aufklappbare Heckscheibe eines Motorfahrzeuges und Heckscheibe mit solcher Vorrichtung
Device for fitting a rear openable window for a motor vehicle and rear window with such a device

(30) Priorité: 26.11.2004 FR 0412599
(43) Date de publication de la demande: 31.05.2006
(73) Titulaire: Peugeot Citroën Automobiles SA, 78140 Vélizy-Villacoublay (FR)
(72) Inventeur: Demougeot, Damien M., 90000 Belfort (FR)

(56) Documents cités:
- EP-A- 1 170 160
- EP-A- 1 270 295
- EP-A- 1 352 766
- FR-A- 2 849 807
- US-A1- 2004 130 177

## Description

La présente invention concerne un dispositif de montage d'une lunette arrière ouvrante pour un véhicule automobile ainsi qu'une lunette arrière ouvrante équipée d'un tel dispositif de montage sur un pavillon d'un véhicule automobile. Un tel dispositif est décrit dans EP 1352766.

Certains types de véhicules automobiles sont pourvus d'une lunette arrière ouvrante qui s'étend entre un bord arrière d'un pavillon du véhicule et un volet de coffre également déplaçable entre une position de fermeture et une position d'ouverture.

Ce dispositif permet à un utilisateur d'ouvrir la lunette arrière indépendamment du volet de coffre facilitant ainsi l'accès au coffre et notamment à la plage arrière du véhicule. L'utilisateur peut également faire basculer l'ensemble formé par la lunette arrière et le volet de coffre pour dégager une large ouverture d'accès au coffre.

Pour ce genre de disposition, la lunette arrière est reliée au pavillon par l'intermédiaire d'au moins une charnière et de préférence par l'intermédiaire de deux charnières disposées chacune de part et d'autre de l'axe longitudinal du véhicule et comportant chacune un charnon fixe fixé sur un bord arrière du pavillon et un charnon mobile fixé sur un bord avant de la lunette.

Mais, la fixation de la lunette arrière ouvrante sur le charnon mobile ne permet pas, lors du montage de cette lunette sur la carrosserie du véhicule, de s'affranchir des différences d'orientation et de position de la surface d'accostage de la lunette sur le charnon, ce qui peut provoquer des dérives au niveau des jeux et des affleurements entre cette lunette et les éléments adjacents de la carrosserie du véhicule et, de ce fait, nuire à l'esthétique du véhicule.

L'invention a pour but de proposer un dispositif de montage d'une lunette arrière ouvrante d'un véhicule automobile qui permet de remédier à ces inconvénients.

L'invention a donc pour objet un dispositif de montage d'une lunette arrière ouvrante pour un véhicule automobile, du type comprenant au moins une charnière formée par un charnon fixe monté sur un bord arrière d'un pavillon et un charnon mobile monté sur un bord avant de la lunette, caractérisé en ce qu'il comprend, entre le charnon mobile et le bord avant de la lunette, un organe de rattrapage de l'orientation angulaire de cette lunette par rapport aux éléments adjacents de la carrosserie du véhicule et de maintien de ladite lunette dans une position d'affleurement avec lesdits éléments de la carrosserie.

Selon d'autres caractéristiques de l'invention :
- l'organe est formé par une liaison de type à rotule,
- l'organe est formé par un charnon mobile intermédiaire interposé entre le charnon fixe et le charnon mobile et relié audit charnon mobile par un axe d'articulation transversal muni d'un système de blocage en rotation,
- une liaison de type à rotule est placée entre le charnon mobile et le bord avant de la lunette,
- la liaison de type à rotule comprend un premier groupe d'éléments à portée sphérique interposé entre le charnon mobile et la lunette et un second groupe d'éléments à portée sphérique disposé au-dessus de cette lunette,
- le premier groupe d'éléments comprend deux coquilles délimitant entre elles la portée sphérique et le second groupe d'éléments comprend un rondelle et un élément de serrage délimitant entre eux la portée sphérique, ledit élément de serrage étant monté sur une tige filetée traversant le charnon mobile, le premier groupe d'éléments, la lunette et le second groupe d'éléments.

L'invention a également pour objet une lunette arrière ouvrante pour un véhicule automobile, caractérisée en ce qu'elle est équipée d'un dispositif de montage sur un pavillon tel que précédemment mentionné.

D'autres caractéristiques et avantages de l'invention apparaîtront à la lecture de la description qui va suivre, donnée à titre d'exemple et, faite en référence aux dessins annexés, sur lesquels :
- la Fig. 1 est une vue schématique en perspective de la partie arrière d'un véhicule automobile comprenant une lunette arrière ouvrante équipée d'un dispositif de montage conforme à l'invention,
- la Fig. 2 est une vue schématique en coupe longitudinale de la partie arrière du véhicule automobile,
- les Figs. 3 et 4 sont deux vues schématiques en coupe axiale du dispositif de montage conforme à l'invention, respectivement selon deux positions, et
- la Fig. 5 est une vue de dessus d'une variante du dispositif de montage conforme à l'invention.

Dans la description qui suit, les termes "avant" et "arrière" doivent être considérés par rapport au sens normal de déplacement du véhicule automobile.

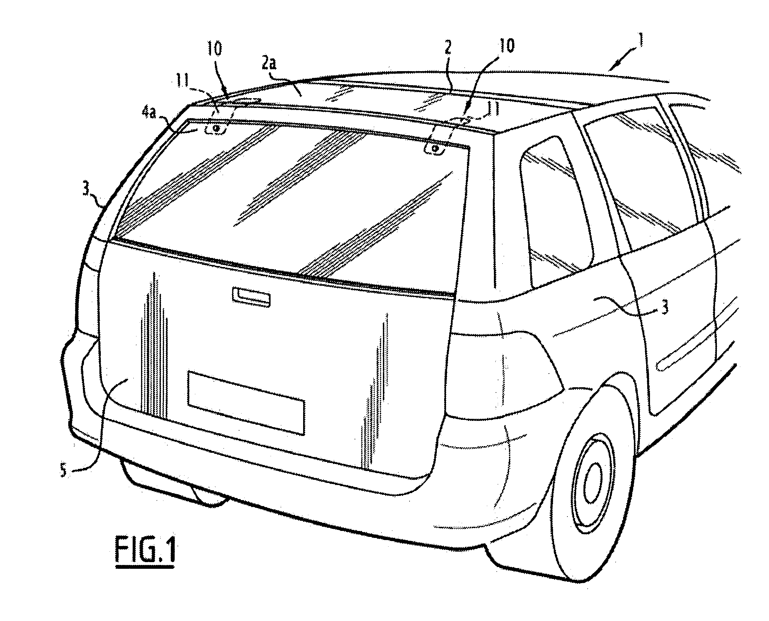

Sur la Fig. 1, on a représenté schématiquement la partie arrière d'un véhicule automobile désignée dans son ensemble par la référence 1 et qui comprend un pavillon 2, deux flancs latéraux 3 et, entre ces éléments, une lunette arrière 4 ouvrante et un volet de coffre 5 disposé au-dessous de la lunette arrière 4.

Cette lunette arrière 4 est déplaçable entre une position de fermeture prolongeant vers le haut le volet de coffre 5 et une position d'ouverture permettant d'accéder au coffre du véhicule automobile sans avoir à ouvrir le volet de coffre 5.

Pour cela, la lunette arrière 4 est fixée sur le bord arrière 2a du pavillon 2 au moyen d'un dispositif de montage conforme à l'invention et désigné dans son ensemble par la référence 10.

Le dispositif de montage 10 comprend au moins une charnière 11 et, de préférence, deux charnières 11 disposées chacune de part et d'autre de l'axe longitudinal du véhicule automobile.

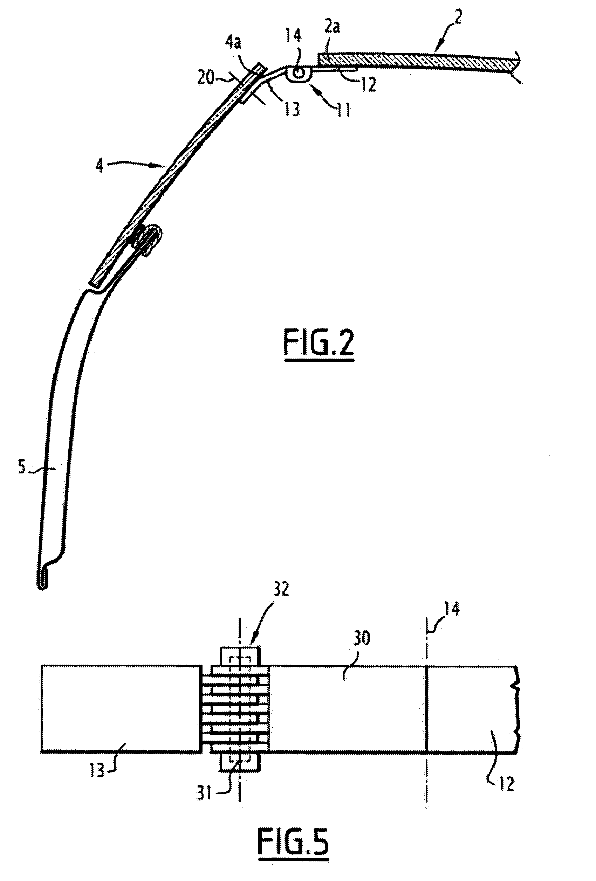

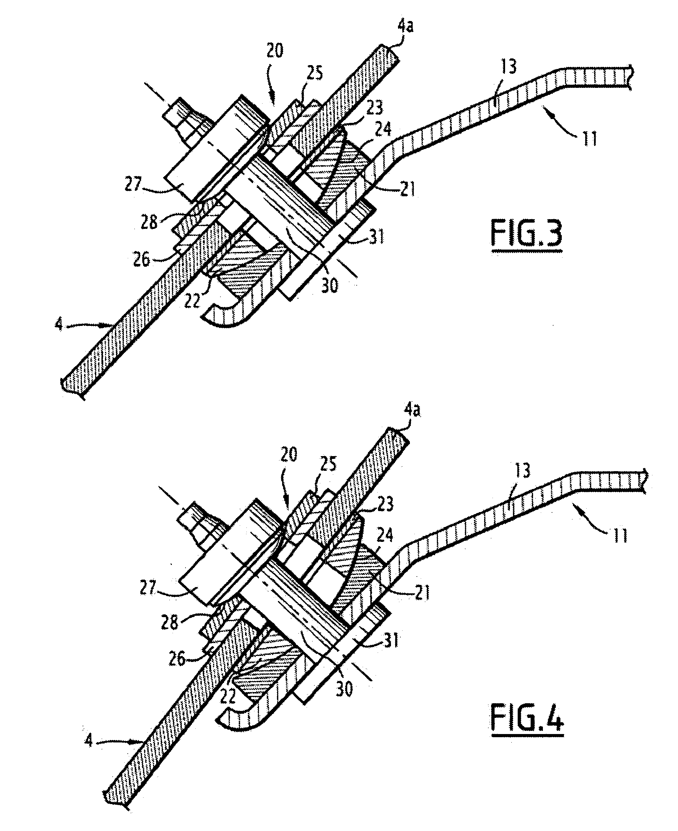

En se reportant maintenant aux Fig. 2 et 3, on va décrire une charnière 11, l'autre charnière 11 étant identique.

La charnière 11 se compose d'un charnon fixe 12 fixé sur le bord arrière 2a du pavillon 2 au moyen d'éléments de liaison de type classique, comme par exemple des rivets ou des vis, et d'un charnon mobile 13 relié au charnon fixe 12 au moyen d'un axe d'articulation transversal 14 permettant ainsi au charnon mobile 13 de pivoter par rapport au charnon fixe 12.

Le charnon mobile 13 est relié au bord avant 4a de la lunette arrière 4 au moyen d'un organe désigné par la référence générale 20 de rattrapage de l'orientation angulaire de cette lunette 4 par rapport aux éléments adjacents de la carrosserie du véhicule et de maintien de ladite lunette 4 dans une position d'affleurement avec ces éléments de la carrosserie du véhicule automobile.

Comme montré à la Fig. 3, l'organe 20 est formé par une liaison de type à rotule comprenant deux groupes d'éléments à portée sphérique. Le premier groupe d'éléments à portée sphérique est interposé entre le charnon mobile 13 et le bord avant 4a de la lunette 4 et comprend une coquille inférieure 21 appliquée sur le charnon mobile 13 et une coquille supérieure 22 appliquée sur la coquille inférieure 21 et sur laquelle est en appui le bord avant 4a de la lunette 4 avec interposition d'un joint 23. Les coquilles 21 et 22 sont appliquées l'une sur l'autre et la surface de contact entre ces deux coquilles définie une portée sphérique 24.

Le second groupe d'éléments est formé par une rondelle 25 appliquée sur la lunette 4 avec interposition d'un joint 26 et par un élément de serrage 27 venant en appui sur la rondelle 25 et constitué par exemple par un écrou. La surface de contact entre la rondelle 25 et l'écrou 27 définit une portée sphérique 28. L'élément de serrage 27 est monté sur une tige filetée 30 qui comporte à son extrémité opposée à celle destinée à recevoir l'élément de serrage 27, un épaulement 31 sur lequel vient en appui le charnon mobile 13, ainsi que montré à la Fig. 3.

La tige 30 traverse le charnon mobile 13, la coupelle inférieure 21, la coupelle supérieure 22, le bord avant 4a de la lunette 4, la rondelle 25 et l'élément de serrage 27. Cette tige 30 ménage avec la coupelle supérieure 22, le bord avant 4a de la lunette 4 et la rondelle 25 un jeu de façon à permettre à ces éléments de pouvoir se déplacer par rapport à la tige 30, alors que cette tige 30 traverse le charnon mobile 13 par un orifice dont le diamètre intérieur correspond sensiblement au diamètre intérieur de ladite tige 30 afin d'empêcher les déplacements transversaux de la tige 30 par rapport au charnon mobile 13.

Lors du montage de la lunette arrière 4 sur la carrosserie du véhicule automobile, l'opérateur après avoir fixé le charnon fixe 12 de chaque charnière 11 sur le bord arrière 2a du pavillon 2 place cette lunette 4 en position de fermeture en l'appliquant sur les éléments adjacents de la carrosserie du véhicule ; l'élément de serrage 27 de chaque charnière 11 étant en position desserrée. Ainsi, les portées sphériques 24 et 28 ménagées respectivement entre les coupelles 21 et 22 et la rondelle 25 et l'élément de serrage 27 sont libres de coulisser l'une par rapport à l'autre et permettent un déplacement de la lunette arrière 4, comme montré à la Fig. 4. Cette liberté de mouvements permet d'absorber les dispersions d'orientation induites par la mauvaise orientation préalable de la surface d'accostage de la lunette 4 par rapport aux charnières 11 et de garantir le respect des jeux et des affleurements entre cette lunette 4 et les éléments adjacents de la carrosserie du véhicule automobile.

Après le positionnement de la lunette 4, l'opérateur solidarise cette lunette 4 avec le charnon mobile 13 de chaque charnière 11 en serrant l'élément de serrage 27 ce qui permet de maintenir la lunette 4 dans sa position idéale.

Selon une variante représentée à la Fig. 5, l'organe de rattrapage de l'orientation angulaire de la lunette 4 et de maintien de cette lunette 4 dans la position d'affleurement est formé par un charnon mobile intermédiaire 30 interposé entre le charnon fixe 12 et le charnon mobile 13 de chaque charnière 11. Dans ce cas, l'axe d'articulation 14 est disposé entre le charnon fixe 12 et le charnon mobile intermédiaire 30. Le charnon mobile intermédiaire 30 est relié au charnon mobile 13 par un axe d'articulation transversal 31 muni d'un système de blocage en rotation 32, comme par exemple un système de blocage à friction permettant de prérégler la position angulaire du charnon mobile 13 supportant la lunette 4 par rapport au charnon mobile intermédiaire 30. Ce système à friction peut être constitué par des contacts sphériques.

L'interposition d'un charnon mobile intermédiaire 30 relié au charnon mobile 13 par un axe d'articulation permet également d'absorber les dispersions d'orientation de la lunette arrière 4.

Selon une autre variante, un organe de type à rotule 20, comme décrit précédemment, peut être interposé entre le bord avant 4a de la lunette arrière 4 et le charnon mobile 13 en plus du charnon mobile intermédiaire 30.

Le dispositif de montage selon l'invention permet donc de s'affranchir des dispersions induites par la mauvaise orientation de la surface d'accostage de la lunette arrière par rapport aux charnières et ainsi de garantir le respect des jeux et des affleurements.

## Revendications

1. Dispositif de montage d'une lunette arrière (4) ouvrante pour un véhicule automobile, du type comprenant au moins une charnière (11) formée par un chamon fixe (12) monté sur un bord arrière (2a) d'un pavillon (2) et un chamon mobile (13) monté sur un bord avant (4a) de la lunette (4), **caractérisé en ce qu'**il comprend, entre le chamon mobile (13) et le bord avant (4a) de la lunette arrière (4), un organe (20) de rattrapage de l'orientation angulaire de cette lunette (4) par rapport aux éléments (2, 3, 5) adjacents de la carrosserie du véhicule et de maintien de ladite lunette (4) dans une position d'affleurement avec lesdits éléments (2, 3, 5) de la carrosserie.

2. Dispositif selon la revendication 1, **caractérisé en ce que** l'organe (20) est formé par une liaison de type à rotule.

3. Dispositif selon la revendication 1, **caractérisé en ce que** l'organe (20) est formé par un charnon mobile intermédiaire (30) interposé entre le charnon fixe (12) et le charnon mobile (13) et relié audit charnon mobile (13) par un axe d'articulation (31) transversal muni d'un système (32) de blocage en rotation.

4. Dispositif selon la revendication 3, **caractérisé en ce qu'**une liaison de type à rotule est placée entre le chamon mobile (13) et le bord avant (4a) de la lunette (4).

5. Dispositif selon la revendication 2 ou 4, **caractérisé en ce que** la liaison de type à rotule comprend un premier groupe d'éléments (21, 22) à portée sphérique (23) interposé entre le charnon mobile (13) et la lunette (4) et un second groupe d'éléments (25, 27) à portée sphérique (28) disposé au-dessus de cette lunette (4).

6. Dispositif selon la revendication 5, **caractérisé en ce que** le premier groupe d'éléments comprend deux coquilles (21, 21) délimitant entre elles la portée sphérique (24) et le second groupe d'éléments comprend une rondelle (25) et un élément de serrage (27) délimitant entre eux la portée sphérique (28), ledit élément de serrage (27) étant monté sur une tige filetée (30) traversant le charnon mobile (13), le premier groupe d'éléments (21, 22), la lunette (4) et le second groupe d'éléments (25, 27).

7. Lunette arrière ouvrante (4) pour un véhicule automobile, **caractérisée en ce qu'**elle est équipée d'un dispositif de montage sur un pavillon (2) selon l'une quelconque des revendications précédentes.

## Claims

1. Device for fitting a rear openable window (4) for a motor vehicle, of the type comprising at least one hinge (11) made up of a fixed leaf (12) fitted to a rear edge (2a) of a roof (2) and a movable leaf (13) fitted to a front edge (4a) of the rear window (4), **characterized in that** it comprises, between the movable leaf (13) and the front edge (4a) of the rear window (4), a member (20) for minimizing the angular orientation of this rear window (4) relative to the adjacent parts (2, 3, 5) of the vehicle bodywork and keeping said rear window (4) flush with said parts (2, 3, 5) of the bodywork.

2. Device according to Claim 1, **characterized in that** the member (20) is formed by a ball-type joint.

3. Device according to Claim 1, **characterized in that** the member (20) is formed by an intermediate movable leaf (30) interposed between the fixed leaf (12) and the movable leaf (13) and connected to said movable leaf (13) by a transverse pivot pin (31) provided with a rotation preventing system (32).

4. Device according to Claim 3, **characterized in that** a ball-type joint is positioned between the movable leaf (13) and the front edge (4a) of the rear window (4).

5. Device according to Claim 2 or 4, **characterized in that** the ball-type joint comprises a first set of parts (21, 22) forming a spherical bearing surface (24) between the movable leaf (13) and the rear window (4) and a second set of parts (25, 27) forming a spherical bearing surface (28) above this rear window (4).

6. Device according to Claim 5, **characterized in that** the first set of parts comprises two shells (21, 22) defining the spherical bearing surface (24) between themselves, and the second set of parts comprises a washer (25) and a clamping part (27) defining the spherical bearing surface (28) between themselves, said clamping part (27) being fitted on a threaded rod (30) passing through the movable leaf (13), the first set of parts (21, 22), the rear window (4), and the second set of parts (25, 27).

7. Rear openable window (4) for a motor vehicle, **characterized in that** it is equipped with a device for fitting it to a roof (2) according to any one of the preceding claims.

## Patentansprüche

1. Montagevorrichtung für eine aufklappbare Heckscheibe (4) eines Kraftfahrzeugs der Art, die mindestens ein Scharnier (11) umfasst, das von einem feststehenden Gelenk (12), das an einem hinteren Rand (2a) eines Dachs (2) montiert ist, und einem beweglichen Gelenk (13), das an einem vorderen Rand (4a) der Heckscheibe (4) montiert ist, gebildet wird, **dadurch gekennzeichnet, dass** sie zwischen dem beweglichen Gelenk (13) und dem vorderen Rand (4a) der Heckscheibe (4) ein Organ (20) des Ausgleichs der Winkelausrichtung dieser Heckscheibe (4) in Bezug auf die benachbarten Elemente (2, 3, 5) der Karosserie des Fahrzeugs und zum Halten der Heckscheibe (4) in einer Position der Bündigkeit mit den Karosserieelementen (2, 3, 5) umfasst.

2. Vorrichtung nach Anspruch 1, **dadurch gekennzeichnet, dass** das Organ (20) durch eine kugelgelenkartige Verbindung gebildet wird.

3. Vorrichtung nach Anspruch 1, **dadurch gekennzeichnet, dass** das Organ (20) durch ein bewegliches Zwischengelenk (30) zwischen dem feststehenden Gelenk (12) und dem beweglichen Gelenk (13) gebildet wird und über eine mit einem Verdrehsicherungssystem (32) versehene Quergelenkachse (31) mit dem beweglichen Gelenk (13) verbunden ist.

4. Vorrichtung nach Anspruch 3, **dadurch gekennzeichnet, dass** eine kugelgelenkartige Verbindung zwischen dem bewegliche Gelenk (13) und dem vorderen Rand (4a) der Heckscheibe (4) angeordnet ist.

5. Vorrichtung nach Anspruch 2 oder 4, **dadurch gekennzeichnet, dass** die kugelgelenkartige Verbindung eine erste Gruppe von Elementen (21, 22) mit Kugelsitz (23), die zwischen dem beweglichen Gelenk (13) und der Heckscheibe (4) angeordnet ist, und eine zweite Gruppe von Elementen (25, 27) mit Kugelsitz (28), die über dieser Heckscheibe (4) angeordnet ist, umfasst.

6. Vorrichtung nach Anspruch 5, **dadurch gekennzeichnet, dass** die erste Gruppe von Elementen zwei Halbschalen (21, 22) umfasst, die zwischen sich den Kugelsitz (24) begrenzen, und die zweite Gruppe von Elementen eine Unterlegscheibe (25) und ein Spannelement (27) umfasst, die zwischen sich den Kugelsitz (28) begrenzen, wobei das Spannelement (27) an einer Gewindestange (30) montiert ist, die durch das bewegliche Gelenk (13), die erste Gruppe von Elementen (21, 22), die Heckscheibe (4) und die zweite Gruppe von Elementen (25, 27) geht.

7. Aufklappbare Heckscheibe (4) für ein Kraftfahrzeug, **dadurch gekennzeichnet, dass** sie mit einer Vorrichtung nach einem der vorhergehenden Ansprüche zur Montage an einem Dach (2) ausgerüstet ist.
